Europäisches Patentamt

European Patent Office

Office européen des brevets

(19)

(11) **EP 1 158 647 A1**

## (12) DEMANDE DE BREVET EUROPEEN

(43) Date de publication:
**28.11.2001 Bulletin 2001/48**

(51) Int Cl.⁷: **H02J 7/00**

(21) Numéro de dépôt: **01400420.4**

(22) Date de dépôt: **16.02.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **01.03.2000 FR 0002645**

(71) Demandeur: **AGENCE SPATIALE EUROPEENNE F-75738 Paris Cedex 15 (FR)**

(72) Inventeurs:
• **Olsson, Dan Hakan Lennart 2215 LL Voorhout (NL)**
• **Dudley, Geoffrey John 2159 LN De Kaag (NL)**

(74) Mandataire: **de Roquemaurel, Bruno et al Novamark Technologies 122, rue Edouard Vaillant 92593 Levallois Perret Cedex (FR)**

(54) **Procédé et dispositif d'équilibrage des charges d'une pluralité de cellules de batterie montées en série**

(57) L'invention concerne un procédé et un dispositif d'équilibrage des charges d'une pluralité de cellules (4) de batterie montées en série.

Selon le procédé de l'invention, on monte en parallèle aux bornes de chaque cellule de batterie une boucle (10) dissipative de courant, on mesure la tension aux bornes de chaque cellule de batterie, on détermine une valeur moyenne des tensions mesurées, on compare chaque tension mesurée à ladite valeur moyenne, et pour une cellule de batterie donnée, on ajuste la tension mesurée à ladite valeur moyenne de manière à égaliser les charges de toutes les cellules de batterie.

Fig. 1

EP 1 158 647 A1

## Description

La présente invention concerne un procédé et un dispositif d'équilibrage des charges d'une pluralité de cellules de batterie montées en série.

Les dispositifs connus d'équilibrage des charges de cellules de batterie associées en série sont basés soit sur la comparaison de la tension propre de chaque cellule de batterie avec une tension de surcharge, soit sur l'actionnement d'un relais à maximum d'intensité reliant les différentes cellules de batterie. Ces techniques sont inadaptées pour les cellules de batterie au lithium car une surcharge en courant ou en tension peut provoquer la destruction des cellules de batterie.

Le document EP 0 767 524 (MOTOROLA) décrit une méthode pour équilibrer la charge répartie entre deux cellules montées en série. Cette méthode consiste à comparer les courants traversant chacune des cellules et à décharger la cellule dont la tension de charge est la plus élevée, lorsque la différence des courants détectés est supérieure à une valeur prédéterminée. Un inconvénient de ce dispositif provient du fait que, d'une part, les courants peuvent être de valeur élevée et endommager les cellules, et d'autre part, du fait que la structure nécessaire pour réaliser cette comparaison est complexe.

Le but de l'invention est de réaliser un procédé et un dispositif d'équilibrage des charges des cellules de batterie montées en série tout en évitant la destruction de ces cellules de batterie par une surcharge de tension ou de courant.

Ce but est obtenu par un procédé dans lequel on monte en parallèle aux bornes de chaque cellule de batterie une boucle dissipative de courant, on mesure la tension aux bornes de chaque cellule de batterie, on détermine une valeur moyenne des tensions mesurées, on compare chaque tension mesurée à ladite valeur moyenne, et pour une cellule de batterie donnée, on ajuste la tension mesurée à ladite valeur moyenne de manière à égaliser les charges de toutes les cellules de batterie.

A cet effet, on ferme la boucle dissipative si la tension mesurée aux bornes de la cellule de batterie considérée est supérieure à la moyenne des tensions mesurées, et on ouvre ladite boucle dissipative si la tension mesurée aux bornes de ladite cellule de batterie est inférieure à la moyenne des tensions mesurées.

Le procédé selon l'invention est mis en oeuvre par un dispositif caractérisé en ce qu'il comporte un moyen pour mesurer la tension propre de chaque cellule de batterie, un moyen pour déterminer la tension moyenne de toutes les cellules de batterie montées en série et un moyen de commande d'égalisation de la tension mesurée avec ladite tension moyenne déterminée.

D'autres caractéristiques et avantages de l'invention ressortiront de la description qui suit, de modes de réalisation préférés de l'invention, pris à titre d'exemples non limitatifs, en référence aux figures annexées dans lesquelles:

- la figure 1 représente schématiquement un schéma bloc d'un dispositif apte à mettre en oeuvre le procédé conforme à l'invention ;

- la figure 2 représente schématiquement un premier mode préféré de réalisation du dispositif de la figure 1 ;

- la figure 3 représente schématiquement un second mode préféré de réalisation du dispositif de la figure 1 ;

- la figure 4 montre une variante du circuit de mesure et de commande d'une cellule, selon le second mode particulier de réalisation illustré sur la figure 3 ;

- la figure 5 montre une autre variante du circuit de mesure et de commande d'une cellule, selon le second mode particulier de réalisation illustré sur la figure 3 ;

- la figure 6 montre encore une autre variante du circuit de mesure et de commande d'une cellule, selon le second mode particulier de réalisation illustré sur la figure 3.

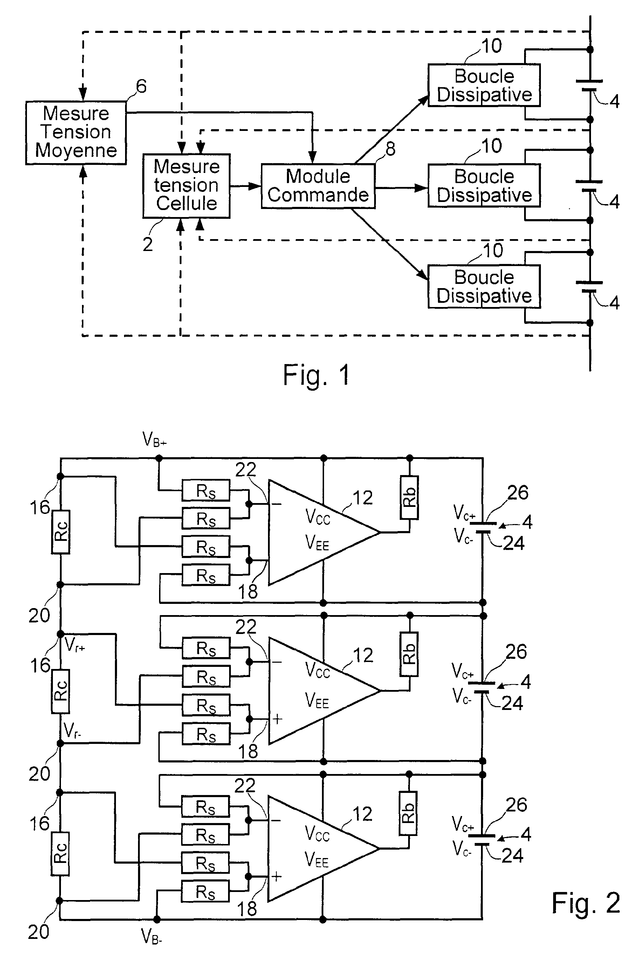

Le dispositif illustré par la figure 1 comporte un premier moyen 2 pour mesurer la tension propre de chaque cellule 4 de batterie, un deuxième moyen 6 pour déterminer la tension moyenne de toutes les cellules 4 de la batterie, montées en série, et un module de commande 8 pour déclencher l'égalisation de la tension mesurée avec ladite tension moyenne déterminée.

Chaque cellule 4 de batterie comporte une boucle 10 dissipative de courant, reliée audit module de commande 8 qui provoque soit l'ouverture de la boucle 10, si la tension propre de la cellule 4 de batterie est inférieure à la tension moyenne, soit la fermeture de ladite boucle si la tension propre de la cellule 4 de batterie est supérieure à la tension moyenne.

Dans un mode préféré de réalisation de l'invention illustré sur la figure 2, ladite boucle dissipative 10 comporte un comparateur 12 et une résistance Rc 14 dont une première borne 16, de potentiel électrique $V_{r+}$, est reliée à la borne positive 18 du comparateur 12 via une première résistance $R_S$, et une deuxième borne 20, de potentiel électrique $V_{r-}$, est reliée à la borne négative 22 dudit comparateur 12 via une deuxième résistance $R_S$ identique à la première, chacune desdites bornes positive 18 et négative 22 du comparateur 12 étant en outre reliées, respectivement, à la borne négative 24 et, à la borne positive 26 de la cellule 4 de batterie de potentiels électriques respectifs $V_{c-}$ et $V_{c+}$, via une troisième et une quatrième résistance $R_S$, identiques à la première. La sortie du comparateur 12 est reliée à une résistance de dissipation Rb. La boucle dissipative 10 comprend donc sur le schéma de la figure 2, résistance Rb, le comparateur 12 qui commande l'ouverture et la fermeture de la boucle et la quatrième résistance $R_s$.

Avec ce dispositif, la boucle dissipative 10 est commandée à la fermeture lorsque la condition suivante est réalisée :

$$V_{c^+} + V_{r^-} > V_{r^+} + V_{c^-} \qquad (1)$$

Dans un mode de réalisation non représenté, le fonctionnement du dispositif selon l'invention est amélioré par l'adjonction d'une résistance de contre-réaction positive reliant la sortie du comparateur 12 à l'entrée positive 18 de ce comparateur 12. Ceci permet de créer un hystérésis qui a pour effet d'éviter les oscillations lorsque les tensions des cellules 4 de batterie ont des valeurs proches.

Dans un autre mode de réalisation, le nombre de cycles d'ouvertures de la boucle dissipative 10 peut être notablement réduit par une légère modification des valeurs des résistances d'entrée $R_S$ du comparateur 12 de manière à fermer la boucle dissipative lorsque la tension propre d'une cellule 4 de batterie dépasse la tension moyenne d'une certaine valeur prédéfinie. Ceci permet de faibles variations des tensions des cellules 4 de batterie sans pour autant fermer la boucle dissipative 10.

Selon un autre mode de réalisation, on peut modifier légèrement la valeur des deux résistances de sommation à l'entrée du comparateur C de manière à dériver du courant des cellules uniquement lorsque leur charge dépasse la valeur moyenne prédéterminée d'une certaine valeur. Ceci a pour effet de réduire le nombre de cycles de commutation et permet d'obtenir des faibles variations de la tension des cellules sans pour autant dériver celles-ci.

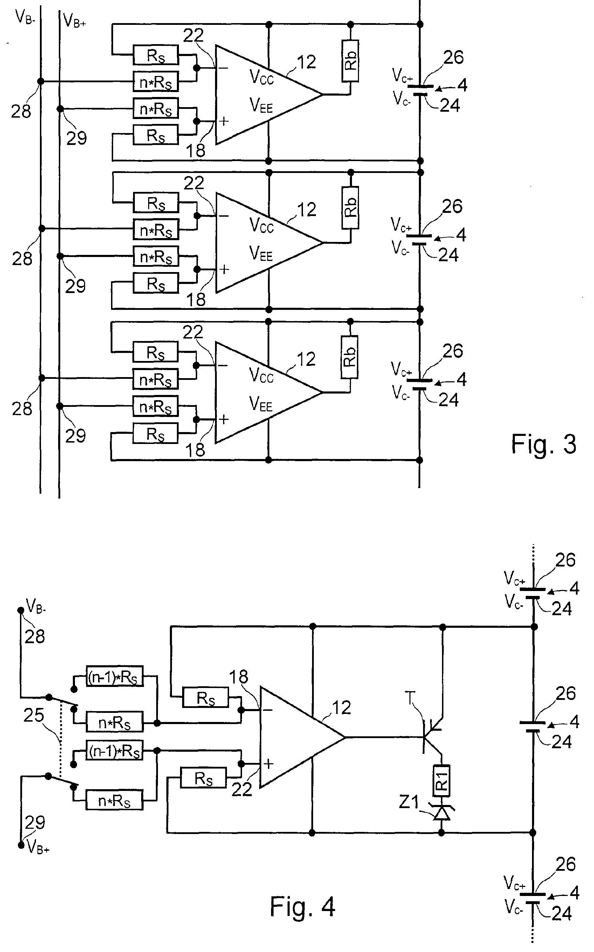

Selon encore un autre mode de réalisation représenté sur la figure 3, on a supprimé le réseau de résistances Rc du circuit représenté sur la figure 2, et les résistances Rs reliant les entrées positive et négative du comparateur 12 respectivement aux potentiels $V_{r^+}$ et $V_{r^-}$ sont remplacées par des résistances ayant pour valeur n*$R_S$, n étant le nombre de cellules 4 de la batterie, et qui sont reliées respectivement aux potentiels $V_{B^+}$ et $V_{B^-}$ de la batterie. De cette manière, la comparaison de tension qui est ainsi effectuée par le comparateur 12 est équivalente à une comparaison de la tension produite par la cellule correspondante avec la tension moyenne d'une cellule (tension de la batterie / n)

Grâce à ces dispositions, les tensions d'entrée du comparateur 12 sont toujours situées entre les tensions d'alimentation $V_{CC}$ et $V_{EE}$ de celui-ci, quels que soient les déséquilibres des charges respectives des cellules 4. La puissance de la batterie qui était dissipée dans le réseau de résistances Rc devient nulle. En outre, il est plus facile d'adapter le circuit au nombre de cellules lorsque l'une d'entre elles est détectée en défaut et mise hors circuit.

Ce dernier point est capital pour les applications spatiales, étant donné que normalement, il y a d'autres dispositifs dans la batterie qui vont mettre hors circuit d'une manière permanente toute cellule détectée en défaut.

Dans le cas du circuit représenté sur la figure 2, la résistance Rc correspondant à la cellule en défaut doit être court-circuitée, ce qui nécessite l'ajout de n circuits de commutation, n étant le nombre de cellules de la batterie. Au contraire, dans le circuit représenté sur la figure 3, un seul commutateur est nécessaire pour l'ensemble de la batterie. En effet, selon une première solution représentée sur la figure 4, chaque cellule est associée à deux résistances supplémentaires de valeur (n-1)*$R_S$ de manière à être dimensionnées pour une batterie ayant n-1 cellules. Avant la panne d'une cellule, le premier ensemble de résistances n*$R_S$ est connecté en parallèle avec les bornes de connexion de la batterie. A la détection d'une panne de cellule, le premier ensemble de résistances est déconnecté, tandis que le second ensemble des résistances (n-1)*$R_S$ est connecté, à l'aide d'un commutateur 25.

Dans un mode particulier de réalisation de l'invention représenté sur la figure 4, la sortie du comparateur 12 est reliée à la base d'un transistor T de type pnp monté en parallèle entre les bornes positive 26 et négative 24 de chaque cellule 4, le collecteur du transistor T étant relié à la borne 24 de la cellule par l'intermédiaire d'une résistance R1 montée en série avec une diode Zener Z1 ou à barrière de potentiel, de manière à éviter la décharge de la cellule si la tension de charge de celle-ci est descendue en dessous d'un seuil de tension prédéterminé. Dans ce circuit, la boucle dissipative est constituée par la résistance R1, la diode Zener Z1 et la jonction collecteur-émetteur du transistor T.

Bien entendu, la diode Zener Z1 peut être montée en série avec d'autres diodes Zener pour atteindre le seuil de tension prédéterminé.

Le transistor T est utile dans le cas où le courant de sortie du comparateur 12 est insuffisant pour décharger efficacement la cellule 4 correspondante lorsque la tension de celle-ci est supérieure à la tension moyenne des cellules de la batterie.

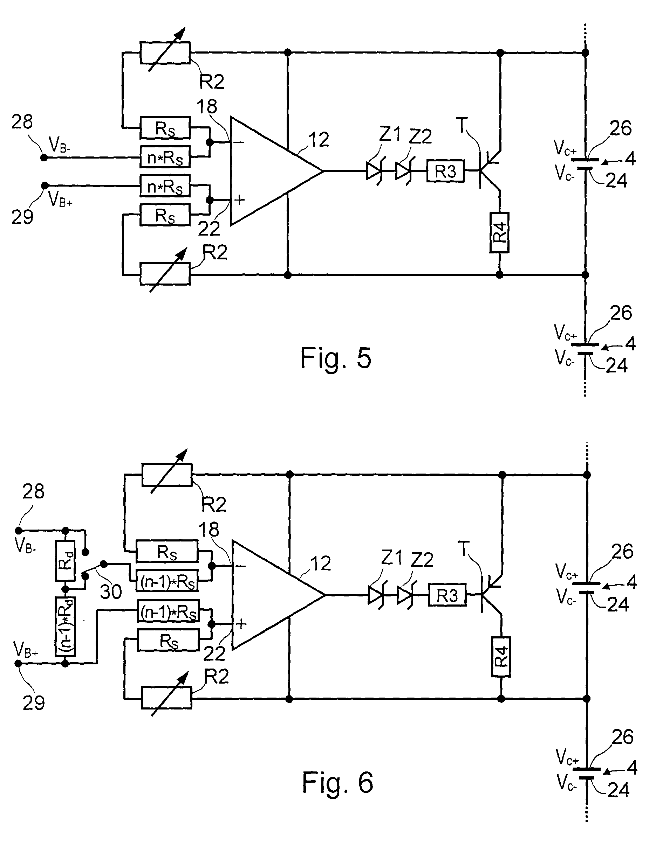

Selon un autre mode de réalisation préféré de l'invention, représenté sur la figure 5, des résistances R2 ajustables sont montées en série avec les résistances $R_S$ pour ajuster la valeur de ces dernières. Par ailleurs, le transistor T est commandé dans ce mode de réalisation par la sortie du comparateur 12 qui est reliée à deux diodes Zener Z1, Z2 et une résistance R3, montées en série, la résistance R3 étant connectée à la base du transistor T. Dans ce circuit, la boucle dissipative est constituée par la jonction collecteur-émetteur du transistor T et par une résistance R4 reliée entre l'émetteur du transistor T et la borne 24 de la cellule 4 correspondante. Les diodes Zener Z1 et Z2 permettent d'augmenter la tension de seuil à partir de laquelle la jonction collecteur-émetteur du transistor T devient passante, et donc en dessous de laquelle la cellule 4 n'est pas déchargée.

Selon une seconde solution représentée sur la figure 6, chaque circuit de cellule est muni d'un ensemble de résistances $R_S$, $(n-1)*R_S$ adapté à une batterie de n-1 cellules. Avant la panne d'une cellule, cet ensemble de résistances est connecté par l'intermédiaire d'un commutateur 30 au point de jonction de deux résistances Rd et $(n-1)*Rd$ montées en série constituant un pont diviseur à résistances, relié aux bornes 28, 29 de la batterie pour obtenir une tension égale à $(n-1)/n$ de la tension $(V_{B+} - V_{B-})$ fournie par la batterie. A la suite d'une panne de cellule, le commutateur 30 est basculé pour appliquer la totalité de la tension fournie par la batterie, entre les deux résistances $(n-1)*R_S$.

Par rapport à la première solution représentée sur les figures 4 et 5, cette solution consomme davantage d'énergie du fait de la présence du pont diviseur, mais nécessite moins de composants supplémentaires.

Bien entendu, tout dispositif programmable tel qu'un ordinateur ou un circuit spécialisé peut être utilisé pour contrôler la charge et la décharge des cellules de l'invention sans sortir du cadre de cette invention.

## Revendications

1.  Procédé d'équilibrage des charges d'une pluralité de cellules (4) de batterie montées en série, **caractérisé en ce que** l'on monte en parallèle aux bornes de chaque cellule (4) de batterie une boucle (10) dissipative de courant, on mesure la tension aux bornes de chaque cellule de batterie (4), on détermine une valeur moyenne des tensions mesurées, on compare chaque tension mesurée à ladite valeur moyenne, et pour une cellule de batterie donnée, on ajuste la tension mesurée à ladite valeur moyenne de manière à égaliser les charges de toutes les cellules de batterie.

2.  Procédé selon la revendication 1, **caractérisé en ce que** l'on ferme la boucle dissipative (10) si la tension mesurée aux bornes de cette cellule de batterie (4) est supérieure à la moyenne des tensions mesurées, et on ouvre ladite boucle dissipative (10) si la tension mesurée aux bornes de ladite cellule de batterie (4) est inférieure à la moyenne des tensions mesurées.

3.  Dispositif d'équilibrage des courants de charge respectifs d'une pluralité de cellules (4) de batterie montées en série, **caractérisé en ce qu'**il comporte un premier moyen (2) pour mesurer la tension propre de chaque cellule (4) de batterie, un deuxième (6) moyen pour déterminer la tension moyenne de toutes les cellules (4) de batterie, montées en série, et un module de commande (8) pour déclencher l'égalisation de la tension mesurée avec ladite tension moyenne déterminée.

4.  Dispositif selon la revendication 3, **caractérisé en ce que** chaque cellule de batterie (4) comporte une boucle (10) dissipative de courant reliée audit module de commande (8) qui provoque soit l'ouverture de la boucle, si la tension propre de la cellule de batterie est inférieure à la tension moyenne, soit la fermeture de ladite boucle (10) si la tension propre de la cellule (4) de batterie est supérieure à la tension moyenne.

5.  Dispositif selon la revendication 3 ou 4, **caractérisé en ce qu'**il comprend un comparateur (12) et une première résistance (Rc) dont une première borne (16) ayant un premier potentiel électrique $(V_{r+})$ est reliée à la borne positive (18) du comparateur (12), via une seconde résistance $(R_S)$, et une deuxième borne (20) ayant un second potentiel électrique $(V_{r-})$ est reliée à la borne négative (22) dudit comparateur (12) via une troisième résistance $(R_S)$, chacune desdites bornes positive (18) et négative (20) du comparateur (12) étant en outre reliées, respectivement, à la borne négative (24) et, à la borne positive (26) de la cellule (4) via une quatrième et une cinquième résistances $(R_S)$, la sortie dudit comparateur (12) étant reliée à une résistance de dissipation (Rb), la différence entre le premier potentiel $(V_{r+})$ et le second potentiel $(V_{r-})$ représentant la tension moyenne d'une cellule de la batterie.

6.  Dispositif selon la revendication 5, **caractérisé en ce que** la boucle dissipative (10) de chaque cellule (4) de batterie est commandée à la fermeture lorsque la condition suivante est réalisée :

$$V_{c+} + V_{r-} > V_{r+} + V_{c-}.$$

$V_{c-}$ et $V_{c+}$ étant les potentiels électriques respectifs de la cellule (4).

7.  Dispositif selon la revendication 3 ou 4, **caractérisé en ce qu'**il comprend pour chaque cellule (4) de la batterie, un comparateur (12) dont les bornes d'entrée positive (18) et négative (22) sont reliées chacune à une première résistance $(R_S)$ et une seconde résistance $(n*R_S)$, les secondes résistances étant reliées respectivement aux bornes (28, 29) de la batterie, les premières résistances $(R_S)$ étant reliées respectivement aux bornes positive (26) et négative (24) de la cellule (4), la sortie du comparateur (12) étant reliée à l'une des bornes de la cellule via une résistance de dissipation (R1).

8.  Dispositif selon la revendication 7, **caractérisé en ce que** les secondes résistances $(n*R_S)$ ont une valeur égale à n fois la valeur de la première résistance ($R_S$), n étant le nombre de cellules de la batterie, et **en ce qu'**il comprend en outre, en parallèle de chaque seconde résistance (n\*$R_S$), une troisième résistance ((n-1)\*$R_S$) ayant pour valeur n-1 fois la valeur de la première résistance ($R_S$), et des moyens de commutation (25) pour relier soit les secondes résistances, soit les troisièmes résistances aux bornes de la batterie, respectivement selon que toutes les cellules de la batterie fonctionnement, ou que l'une des cellules de la batterie est défaillante.

9. Dispositif selon la revendication 7, **caractérisé en ce que** les secondes résistances ((n-1)\*$R_S$) ont une valeur égale à n-1 fois la valeur de la première résistance ($R_S$), n étant le nombre de cellules de la batterie, et **en ce qu'**il comprend en outre des moyens (Rd, (n-1)\*Rd) pour générer une tension égale à (n-1)/n fois la tension ($V_{B+}$ - $V_{B-}$) aux bornes de la batterie, et des moyens de commutation (30) pour appliquer aux secondes résistances soit la tension aux bornes de la batterie en cas de défaillance d'une cellule (4) de la batterie, soit la tension issue des moyens de génération de tension dans le cas contraire.

10. Dispositif selon l'une des revendications 4 à 9, **caractérisé en ce qu'**il comporte pour chaque cellule (4) de la batterie, au moins une diode Zener (Z1) montée en série dans la boucle dissipative (10), de manière à empêcher la décharge des cellules lorsque la tension de ces dernières descend en dessous d'un seuil prédéterminé.

11. Dispositif selon l'une des revendications 4 à 10, **caractérisé en ce qu'**il comporte pour chaque cellule (4) de la batterie, un transistor (T) dont la base est reliée à la sortie du comparateur (12), et dont l'émetteur et le collecteur sont reliés respectivement aux bornes de la cellule (4), une résistance de dissipation (R1) étant disposée en série dans la boucle dissipative (10) comprenant la jonction collecteur-émetteur du transistor (T).

12. Dispositif selon la revendication 11, **caractérisé en ce qu'**il comprend pour chaque cellule (4) de la batterie au moins une diode Zener (Z1, Z2) montée en série entre la sortie du comparateur (12) et la base du transistor (T) pour augmenter la tension de seuil à partir de laquelle la jonction collecteur-émetteur du transistor (T) devient passante, et ainsi pour empêcher la décharge de la cellule (4) lorsque la tension aux bornes de celle-ci descend en dessous d'un seuil prédéterminé.

Fig. 1

Fig. 2

Fig. 3

Fig. 4

Fig. 5

Fig. 6

## RAPPORT DE RECHERCHE EUROPEENNE

**Office européen des brevets**

**Numéro de la demande**

EP 01 40 0420

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 773 159 A (BEARD PAUL) 30 juin 1998 (1998-06-30) * colonne 7, alinéa 2; figure 3 * | 1 | H02J7/00 |
| Y | | 2-4 | |
| Y | EP 0 831 571 A (JAPAN TOBACCO INC ;INTEGRAN INC (JP)) 25 mars 1998 (1998-03-25) * colonne 8; figure 1 * | 2-4 | |
| A | | 5-7 | |
| A | DE 197 08 842 A (KAHLEN HANS PROF DR ING) 10 septembre 1998 (1998-09-10) * le document en entier * | 1-7 | |
| A | FR 2 675 319 A (ICBT VALENCE) 16 octobre 1992 (1992-10-16) * le document en entier * | 1-7 | |

**DOMAINES TECHNIQUES RECHERCHES (Int.Cl.7)**

H02J

Le présent rapport a été établi pour toutes les revendications

| Lieu de la recherche | Date d'achèvement de la recherche | Examinateur |
|---|---|---|
| LA HAYE | 10 juillet 2001 | Moyle, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 158 647 A1**

**ANNEXE AU RAPPORT DE RECHERCHE EUROPEENNE
RELATIF A LA DEMANDE DE BREVET EUROPEEN NO.**   EP 01 40 0420

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-07-2001

| Document brevet cité au rapport de recherche | Date de publication | Membre(s) de la famille de brevet(s) | Date de publication |
|---|---|---|---|
| US 5773159 A | 30-06-1998 | AUCUN | |
| EP 0831571 A | 25-03-1998 | JP  10066276 A<br>US   5932990 A | 06-03-1998<br>03-08-1999 |
| DE 19708842 A | 10-09-1998 | AUCUN | |
| FR 2675319 A | 16-10-1992 | AUCUN | |

EPO FORM P0460

Pour tout renseignement concernant cette annexe : voir Journal Officiel de l'Office européen des brevets, No.12/82

10